(19) Europäisches Patentamt
European Patent Office
Office européen des brevets

(11) EP 4 625 568 A1

(12) # EUROPEAN PATENT APPLICATION
published in accordance with Art. 153(4) EPC

(43) Date of publication:
**01.10.2025 Bulletin 2025/40**

(21) Application number: **23894213.0**

(22) Date of filing: **28.08.2023**

(51) International Patent Classification (IPC):
***H01M 10/052** (2010.01)* ***H01G 11/06** (2013.01)*
***H01G 11/30** (2013.01)* ***H01G 11/62** (2013.01)*
***H01G 11/64** (2013.01)* ***H01M 10/0567** (2010.01)*
***H01M 50/431** (2021.01)*

(52) Cooperative Patent Classification (CPC):
**H01G 11/06; H01G 11/30; H01G 11/62; H01G 11/64; H01M 10/052; H01M 10/0567; H01M 50/431;** Y02E 60/10

(86) International application number:
**PCT/JP2023/031012**

(87) International publication number:
**WO 2024/111197 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.11.2022 JP 2022186110**

(71) Applicant: **Niterra Co., Ltd.**
**Nagoya-shi, Aichi 461-0005 (JP)**

(72) Inventors:
- **WATANABE, Yuu**
**Nagoya-shi, Aichi 461-0005 (JP)**
- **TAKEUCHI, Yuki**
**Nagoya-shi, Aichi 461-0005 (JP)**
- **MIZUTANI, Hidetoshi**
**Nagoya-shi, Aichi 461-0005 (JP)**
- **IWASAKI, Masato**
**Nagoya-shi, Aichi 461-0005 (JP)**

(74) Representative: **Zimmermann & Partner Patentanwälte mbB**
**Postfach 330 920**
**80069 München (DE)**

(54) **MIXTURE, SHEET, ELECTROCHEMICAL ELEMENT, AND POWER STORAGE DEVICE**

(57) Provided are a mixture, a sheet, an electrochemical element, and a power storage device which can enhance the diffusibility of substances at the interface between an oxide and an electrolytic solution. A mixture (10) contains an oxide (19) and an electrolytic solution, wherein the electrolytic solution is formed of an electrolytic salt dissolved in a sulfone compound represented by a chemical formula (1). In the chemical formular (1), each of $R_1$ and $R_2$ independently represents a C1-C4 alkyl group, a C1-C4 alkenyl group, or a C1-C4 halogenated alkyl group, or two of the alkyl group, alkenyl group, and halogenated alkyl group are bonded to each other to form a ring structure. The self-diffusion coefficient of at least one component contained in the electrolytic solution in contact with the oxide, as measured through pulsed field gradient nuclear magnetic resonance spectroscopy, is equal to or greater than 6 times the self-diffusion coefficient of the component contained in the electrolytic solution which is not in contact with the oxide, measured at the same temperature as that in measurement of the former self-diffusion coefficient.

*FIG. 1*

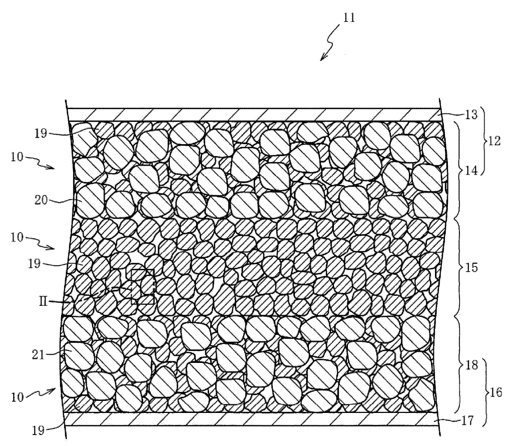


EP 4 625 568 A1

## Description

TECHNICAL FIELD

The present invention relates to a mixture containing an oxide and an electrolytic solution, to a sheet, to an electrochemical element, and to a power storage device.

BACKGROUND ART

There has been known a technique for enhancing the safety of an electrochemical element containing an electrolytic solution and reducing leakage of liquid therefrom by providing a mixture of an oxide and an electrolytic solution in the electrochemical element. In a prior art technique disclosed in Patent Literature 1, an electrolyte sheet is formed by using a mixture containing silicon dioxide as an oxide, and an electrolytic solution containing tetraglyme.

CITATION LIST

PATENT LITERATURE

Patent Literature 1: JP 2020-113527A

SUMMARY OF INVENTION

TECHNICAL PROBLEM

For improvement of the ion conductivity of a mixture containing an oxide and an electrolytic solution, it is important to increase the diffusion rate of the components of the electrolytic solution near the interface between the oxide and the electrolytic solution, including desolvation of cations at the interface between the oxide and the electrolytic solution. The prior art technique has room for improvement in terms of the diffusibility of substances at the interface of the oxide.

The present invention has been accomplished in order to solve this problem, and an object of the invention is to provide a mixture, a sheet, an electrochemical element, and a power storage device which can enhance the diffusibility of substances at an interface.

SOLUTION TO PROBLEM

A first mode which achieves the above object is a mixture containing an oxide and an electrolytic solution, wherein the electrolytic solution is formed of an electrolytic salt dissolved in a sulfone compound represented by a chemical formula (1).

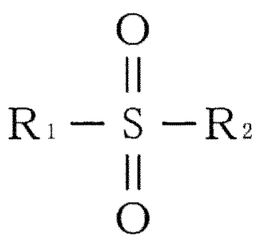

(1)

In the chemical formular (1), each of $R_1$ and $R_2$ independently represents a C1-C4 alkyl group, a C1-C4 alkenyl group, or a C1-C4 halogenated alkyl group, or two of the alkyl group, alkenyl group, and halogenated alkyl group are bonded to each other to form a ring structure. The self-diffusion coefficient of at least one component contained in the electrolytic solution in contact with the oxide, as measured through pulsed field gradient nuclear magnetic resonance spectroscopy, is equal to or greater than 6 times the self-diffusion coefficient of the same component contained in the electrolytic solution which is not in contact with the oxide, measured at the same temperature as that in measurement of the former self-diffusion coefficient.

A second mode is the mixture of the first mode, wherein the oxide is alumina.

A third mode is the mixture of the first or second mode, wherein the electrolyte salt is a lithium salt.

A fourth mode is a sheet which contains the mixture of any one of the first to third modes.

A fifth mode is an electrochemical element which contains the mixture of any one of the first to third modes.

A sixth mode is a power storage device comprising a positive electrode layer, a negative electrode layer, and a

separator which isolates the positive electrode layer and the negative electrode layer, wherein the power storage device contains the mixture of any one of the first to third modes.

A seventh mode is the power storage device of the sixth mode, wherein at least one of the positive electrode layer, the negative electrode layer, and the separator contains the mixture.

An eighth mode is the power storage device of the sixth mode, wherein at least one of the positive electrode layer and the negative electrode layer includes a current-collecting layer, the power storage device comprises a protective layer which is in contact with at least one of the separator and the current-collecting layer, and the protective layer contains the mixture.

## ADVANTAGEOUS EFFECTS OF INVENTION

According to the mixture, the sheet, the electrochemical element, and the power storage device of the present invention, the diffusibility of substances at the interface between the oxide and the electrolytic solution can be enhanced.

## BRIEF DESCRIPTION OF DRAWINGS

FIG. 1 is a cross-sectional view of an electrochemical element containing a mixture according to a first embodiment.
FIG. 2 is a cross-sectional view of the electrochemical element showing, on an enlarged scale, a portion of FIG. 1 indicated by II.
FIG. 3 is a view schematically showing a garnet-type crystal structure.
FIG. 4 is a cross-sectional view of an electrochemical element according to a second embodiment.
FIG. 5 is a cross-sectional view of an electrochemical element according to a third embodiment.

## DESCRIPTION OF EMBODIMENTS

Hereinafter, preferred embodiments of the present invention will be described with reference to attached drawings. FIG. 1 is a schematic cross-sectional view of an electrochemical element 11 including a mixture 10 according to one embodiment. The electrochemical element 11 according to the present embodiment is a lithium ion solid battery (power storage device) in which power generating elements are formed of a solid material. The expression "a power generating element is formed of a solid material" refers to a case in which a main body of the power generating element is formed of a solid material, and also encompasses an embodiment in which the main body has been impregnated with liquid.

The electrochemical element 11 includes, from top to bottom, a positive electrode layer 12, an electrolyte layer 15, and a negative electrode layer 16. The positive electrode layer 12, the electrolyte layer 15, and the negative electrode layer 16 are built in a case (not illustrated).

The positive electrode layer 12 includes an active material layer 14 and a current-collecting layer 13 stacked thereon. The current-collecting layer 13 is a member having an electrical conductivity. Examples of the material of the current-collecting layer 13 include metals selected from among Ni, Ti, Fe, and Al; alloys each containing two or more of such metals; stainless steel; and carbon material.

The active material layer 14 contains a mixture 10 and an active material 20. The mixture 10 contains an oxide 19. For lowering the electrical resistance of the active material layer 14, the active material layer 14 may contain a conducting aid. Examples of the conducting aid include carbon black, acetylene black, Ketjen black, carbon fiber, Ni, Pt, and Ag.

Examples of the active material 20 include a metal oxide in which the metal includes a transition metal, a sulfur-containing active material, and an organic active material. Examples of the metal oxide in which the metal includes a transition metal include a metal oxide in which the metal includes Li and at least one species selected from among Mn, Co, Ni, Fe, Cr, and V Specific examples of the metal oxide in which the metal includes a transition metal include $LiCoO_2$, $LiNi_{0.8}Co_{0.15}Al_{0.05}O_4$, $LiMn_2O_4$, $LiNiVO_4$, $LiNi_{0.5}Mn_{1.5}O_4$, $LiNi_{1/3}Mn_{1/3}Co_{1/3}O_2$, and $LiFePO_4$.

In order to suppress reaction between the active material 20 and the oxide 19, a coating layer may be provided on the surface of the active material 20. Examples of the coating layer include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoxydimethane; and phenazine oxide.

The electrolyte layer 15 is composed of the mixture 10. The mixture 10 contains the oxide 19 and an electrolytic solution 22 (see FIG. 2). The mixture 10 may further contain a binder. The electrolyte layer 15 corresponds to a separator

which isolates the positive electrode layer 12 and the negative electrode layer 16.

The negative electrode layer 16 includes an active material layer 18 and a current-collecting layer 17 stacked thereon. The current-collecting layer 17 is a member having an electrical conductivity. Examples of the material of the current-collecting layer 17 include metals selected from among Ni, Ti, Fe, Cu, and Si; alloys each containing two or more of such metals; stainless steel; and carbon material.

The active material layer 18 contains the mixture 10 and an active material 21. In order to lower the resistance of the active material layer 18, the active material layer 18 may further contain a conducting aid. Examples of the conducting aid include carbon black, acetylene black, Ketjen black, carbon fiber, Ni, Pt, and Ag. Examples of the active material 21 include Li, Li-Al alloy, $Li_4Ti_5O_{12}$, graphite, In, Si, Si-Li alloy, and $SiO_X$ (for example, $0.5 < X < 1.5$). Similar to the electrolyte layer 15, the active material layers 14, 18 may further contain a binder.

FIG. 2 is a cross-sectional view of the electrochemical element 11 showing, on an enlarged scale, a portion of FIG. 1 indicated by II. The mixture 10 contained in the electrochemical element 11 contains the oxide 19 and the electrolytic solution 22. The oxide 19 is preferably an oxide which is insoluble in the electrolytic solution 22 and does not have electron conductivity. Examples of the shape of the oxide 19 include a granular shape, a spherical shape, a rod-like shape, a needle-like shape, a polygonal shape, a fibrous shape, and a scaly shape. The oxide 19 is appropriately selected from inorganic compounds such as alumina, silica, ceria, zirconia, oxide-based solid electrolyte, etc.

Examples of the oxide-based solid electrolyte include an oxide having a perovskite-type crystal structure, an oxide having a NASICON-type crystal structure, an oxide having a LISICON-type crystal structure, and an oxide having a garnet-type crystal structure containing Li, La, and Zr. Examples of the perovskite-type oxide include an oxide containing at least Li, Ti, and La (e.g., $La_{2/3-X}Li_{3X}TiO_3$). Examples of the NASICON-type oxide include an oxide containing at least Li, M (wherein M is one or more elements selected from Ti, Zr, and Ge), and P (e.g., $Li(Al,Ti)_2(PO_4)_3$ or $Li(Al,Ge)_2(PO_4)_3$). Examples of the LISICON-type oxide include $Li_{14}Zn(GeO_4)_4$.

FIG. 3 is a view schematically showing a garnet-type crystal structure. The garnet-type crustal structure is represented by a general formula $C_3A_2B_3O_{12}$. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The oxide 19 generally has a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, wherein Fb1 forms the B site (Sb1), and Fb2 forms the B site (Sb2). In one possible case, in $Li_7La_3Zr_2O_{12}$ having a garnet-type crystal structure, La is present in the C sites (Sc); Zr in the A sites (Sa), and Li in the B sites (Sb) and the vacancy (V).

The oxide having a garnet-type crystal structure containing Li, La, and Zr exhibits an XRD pattern similar to that of an X-ray diffraction file No. 422259 ($Li_7La_3Zr_2O_{12}$) of CSD (Cambridge Structural Database). As compared with No. 422259, the oxide may have differences in the type of elements forming oxide, the Li concentration, and the like. Therefore, diffraction angle and intensity ratio may vary. Both $Li_7La_3Zr_2O_{12}$ having a tetragonal crystal structure which has low ion conductivity and $Li_7La_3Zr_2O_{12}$ having a cubic crystal structure which has high ion conductivity can be employed.

In the oxide having a garnet-type crystal structure containing Li, La, and Zr or a crystal structure similar to the garnet-type crystal structure, a part of the elements forming the oxide may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Referring back to FIG. 2, the description will be continued. Examples of the oxide 19 include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

The oxide having a garnet-type crystal structure or a crystal structure similar to the garnet-type crystal structure preferably contains, in addition to Li, La, and Za, at least one of Mg and element A (A represents at least one element selected from the group consisting of Ca, Sr, and Ba), and satisfies all the following conditions (1) to (3) regarding mole proportions of the elements. Alternatively, the oxide preferably contains both Mg and element A, and satisfies all the following conditions (4) to (6) regarding mole proportions of the elements. From the viewpoint of elevating the ion conductivity of the oxide 19, element A is preferably Sr.

$$(1)\ 1.33 \leq Li/(La+A) \leq 3$$

$$(2)\ 0 \leq Mg/(La+A) \leq 0.5$$

$$(3)\ 0 \leq A/(La+A) \leq 0.67$$

$$(4)\ 2.0 \leq Li/(La+A) \leq 2.5$$

$$(5)\ 0.01 \leq Mg/(La+A) \leq 0.14$$

$$(6)\ 0.04 \leq A/(La+A) \leq 0.17$$

The median diameter of circle-equivalent diameters of particles of the oxide 19 appearing in a cross section of the electrolyte layer 15 is preferably 0.2 to 10 μm, more preferably 0.2 to 6 μm. The median diameter is set to these ranges so as to render the surface area of each particle of the oxide 19 appropriately large, thereby enhancing the diffusibility of the components of the electrolytic solution 22 present on the surface of the oxide 19.

The median diameter of the oxide 19 is obtained through the following procedure. An image of the oxide 19 appearing in a cross section of the electrolyte layer 15 (a polished surface, a surface obtained as a result of irradiation of a focused ion beam (FIB), or a surface obtained as a result of ion milling) is captured by using a scanning electron microscope (SEM), and the captured image is analyzed. Specifically, the circle-equivalent diameter of each particle of the oxide 19 (the diameter of a circle having the same area as the area of each particle of the oxide 19 appearing in the cross section) is calculated from the area of the particle, and a volume-based particle size distribution is obtained. The median diameter is a circle-equivalent diameter at which the cumulative value of frequences in the particle size distribution becomes 50%. In order to secure accuracy, an image for obtaining the particle size distribution is that of a portion of the cross section of the electrolyte layer 15, the portion having an area of 400 $\mu m^2$ or greater.

The electrolytic solution 22 is composed of an organic solvent containing an electrolyte salt dissolved therein. The electrolyte salt is a compound which is employed for establishing transfer of cations between the positive electrode layer 12 and the negative electrode layer 16. In the case where the lithium salt is the electrolyte salt, examples of the anion of the lithium salt include halide ions (e.g., $I^-$, $Cl^-$, and $Br^-$), $SCN^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and $RCOO^-$ (wherein R represents a C1 to C4 alkyl group, a phenyl group, or a naphthyl group).

The anion of the lithium salt is preferably a sulfonylimido moiety having a sulfonyl group $-S(=O)_2^-$; such as $N(SO_2F)_2^-$, $N(SO_2CF_3)_2^-$, or $N(SO_2C_2F_5)_2^-$ for an advantageous property of the sulfonylimide anion. Specifically, even when the salt concentration increases, a rise in viscosity of the electrolytic solution and a drop in ion conductivity are suppressed. Further, a film which has high stability and low resistivity (SEI) is formed, whereby reductive decomposition of the electrolytic solution is suppressed, and the potential window on the reduction side can be expanded.

In some cases, $N(SO_2F)_2^-$ may be abbreviated as $[FSI]^-$) (i.e., bis(fluorosulfonyl)imide anion) and $N(SO_2CF_3)_2^-$ may be abbreviated as $[TFSI]^-$ (i.e., bis(trifluoromethanesulfonyl)imide anion). A particularly preferred example of the lithium salt is lithium bis(fluorosulfonyl) imide (LiFSI), because LiFSI is small in influence of a rise in viscosity of the electrolytic solution and is effective for formation of a good passive film (SEI).

The organic solvent of the electrolytic solution 22 contains a sulfone compound represented by chemical formula (1). One or more types of materials appropriately selected from the group of materials shown below may be used as the organic solvent of the electrolytic solution 22.

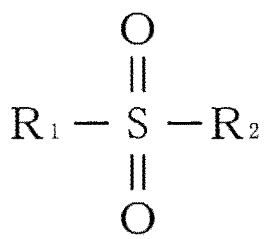
(1)

In chemical formular (1), each of $R_1$ and $R_2$ independently represents a C1-C4 alkyl group, a C1-C4 alkenyl group, or a C1-C4 halogenated alkyl group, or two of the alkyl group, alkenyl group, and halogenated alkyl group may be bonded to each other to form a ring structure. Each of $R_1$ and $R_2$ may be a linear hydrocarbon group or a hydrocarbon group having a branched or ring structure.

Examples of the C1-C4 alkyl group include a methyl group, an ethyl group, an n-propyl group, an isopropyl group, a 1-ethylpropyl group, an n-butyl group, an isobutyl group, a sec-butyl group, a tert-butyl group, a 2-methylbutyl group, and a 3,3-dimethylbutyl group. Examples of the C1-C4 alkenyl group include a vinyl group, a 1-propenyl group, an allyl group, a

1-butenyl group, a 2-butenyl group, and a 3-butenyl group.

Examples of the C1-C4 halogenated alkyl group include a fluoromethyl group, a difluoromethyl group, a trifluoromethyl group, a 2,2,2-trifluoroethyl group, a 1,1,2,2-tetrafluoroethyl group, a perfluoroethyl group, a 2,2,3,3-tetrafluoropropyl group, a perfluoropropyl group, a perfluoroisopropyl group, a perfluorobutyl group, a perfluoroisobutyl group, a chloromethyl group, a dichloromethyl group, a trichloromethyl group, a 2,2,2-trichloroethyl group, a 1,1,2,2-tetrachloroethyl group, a perchloroethyl group, a 2,2,3,3-tetrachloropropyl group, a perchloropropyl group, a perchloroisopropyl group, a perchlorobutyl group, a perchloroisobutyl group, a bromomethyl group, a dibromomethyl group, a tribromomethyl group, a 2,2,2-tribromoethyl group, a 1,1,2,2-tetrabromoethyl group, a 2,2,3,3-tetrabromopropyl group, an iodomethyl group, a diiodomethyl group, a triiodomethyl group, a 2,2,2-triiodoethyl group, a 1,1,2,2-tetraiodoethyl group, and a 2,2,3,3-tetraiodopropyl group.

In chemical formula (1), examples of the cyclic compound in which two of the alkyl group, alkenyl group, and halogenated alkyl group are bonded to each other thereby forming a ring structure include trimethylene sulfone, sulfolane, fluoro sulfolane, difluoro sulfolane, methyl sulfolane, and dimethyl sulfolane. The sulfone compound represented by chemical formula (1) is high in oxidation resistance and therefore is advantageous for elevation of the voltage of the electrochemical element 11.

No limitation is imposed on the salt concentration of the electrolytic solution 22, and the salt concentration (molar concentration by mass) of the electrolytic solution 22 is preferably 1.4 mol/kg or greater, more preferably 1.6 mol/kg or greater because of the following reason. As compared with commonly used electrolytic solutions whose salt concentrations are near 1 mol/kg, the number of solvent molecules coordinating to cations increases, and the number of uncoordinating solvent molecules decreases, whereby the transport number of cations of the electrolyte salt can be increased.

The electrolytic solution 22 may contain solvated ionic liquid. The solvated ionic liquid is composed of cations solvated by the sulfone compound represented by chemical formula (1) and their counter ions. The electrolytic solution 22 may assume a state in which all the solvent molecules coordinate to cations and uncoordinating solvent molecules are not present, or a state in which all the solvent molecules coordinate to cations (i.e., uncoordinated solvent molecules are not present), and cations which are not coordinated to the solvent molecules are excessively present. It has been known that, in the case of the electrolytic solution 22 in which cations are solvated by the sulfone compound and whose salt concentration is high, when the electrolytic solution 22 assumes the state of the solvated ionic liquid, it has a characteristic coordination structure, and the transport rate of lithium ions becomes faster.

The mixture 10 may contain an additional organic solvent in addition to the sulfone compound represented by chemical formula (1). The additional organic solvent, for example, reduces the viscosity of the electrolytic solution 22 and increases the ion conductivity of the electrolytic solution 22. Examples of the additional organic solvent include propylene carbonate, dimethylcarbonate, diethyl carbonate, ethyl methylcarbonate, trimethyl phosphate, triethyl phosphate, γ-butyrolactone, dimethyl methylphosphonate, acetonitrile, isobutyl methyl ketone, nitromethane, methyl ethyl ketone, tetramethylsilane, siloxane compounds, and organosilicic acid compounds. As the additional organic solvent, one or more solvents which do not easily affect the coordination state of cations or solvent molecules are appropriately chosen.

The mixture 10 may contain various types of additives used for lithium ion batteries. Examples of such additives include a carbonate compound having an unsaturated bond or a halogen atom (e.g., vinylene carbonate and fluoroethylene carbonate), flame retardant compounds such as ionic liquids, acid anhydrides, nitrile compounds, redox shuttle compounds such as anisole derivatives, and overcharge prevention agents such as aromatic compounds.

The ratio (wt%) of the amount of the sulfone compound to the total amount of the sulfone compound and the additional organic solvent contained in the mixture 10 is preferably 75% or greater for securing the transport number of cations.

The salt concentration of the electrolytic solution 22 is preferably 4.0 mol/kg or less, because, in the case where the salt concentration of the electrolytic solution 22 is greater than 4.0 mol/kg, the tendency that the ion conductivity lowers with a rise in viscosity of the electrolytic solution 22 becomes considerable.

In the mixture 10, the combination of the oxide 19 and the electrolytic solution 22 are set such that the self-diffusion coefficients of one or more components contained in the electrolytic solution 22 in contact with the oxide 19, measured by pulsed field gradient nuclear magnetic resonance spectroscopy (PFG-NMR), become equal to or greater than 6 times the self-diffusion coefficients of the components contained in the electrolytic solution 22 which is not in contact with the oxide 19, the self-diffusion coefficients being measured at the same temperature as the temperature in the previously mentioned measurement of the self-diffusion coefficients.

The self-diffusion coefficient $D_M$ of each component of the electrolytic solution 22 in contact with the oxide 19 shows the diffusion rate of the component of the electrolytic solution 22 in a sample in which the oxide 19 and the electrolytic solution 22 are mixed together. The self-diffusion coefficient $D_L$ of each component of the electrolytic solution 22 which is not in contact with the oxide 19 shows the diffusion rate of the component of the electrolytic solution 22. The self-diffusion coefficients $D_M$ and $D_L$ are measured at the same temperature. If the difference in temperature between the measurement of the self-diffusion coefficient $D_M$ and the measurement of the self-diffusion coefficient $D_L$ is 1°C or smaller,

the difference is permissible because it can be considered that both the measurements are performed at the same temperature. When comparison between the self-diffusion coefficients $D_M$ and $D_L$ of the same component shows the fact that the self-diffusion coefficient $D_M$ of the component of the electrolytic solution 22 in contact with the oxide 19 is equal to or greater than 6 times the self-diffusion coefficient $D_L$ of the component of the electrolytic solution 22 which is not in contact with the oxide 19, the fact shows that the diffusibility of a substance at the interface of the oxide 19 in contact with the electrolytic solution 22 is equal to or greater than 6 times the diffusibility of the substance in the case where the electrolytic solution is solely present.

In some cases, it is difficult to determine the accuracy of the apparent value of the self-diffusion coefficient obtained through measurement by PFG-NMR in relation to the actual value of the self-diffusion coefficient. In the case where it is difficult to perform measurement (for example, AC impedance measurement, evaluation of diffusion coefficients using radioactive isotopes) other than PFG-NMR for comparative verification, of course, the apparent self-diffusion coefficient obtained by PFG-NMR is used. However, even in the case where the measurement other than PFG-NMR can be performed, the apparent self-diffusion coefficient obtained by PFG-NMR is used for unification of measurement methods.

When the cations move from the electrolytic solution 22 to the oxide 19, presumably, desolvation of the cations from the solvent molecules or dissociation of ions from the ion pairs formed through complexation of the counter ions and the cations occur at the interface of the oxide 19, resulting in a rate-determining step of ion conduction.

In the case where the diffusibility of a substance at the interface of the oxide 19 is large, when desolvation of cations and dissociation of ion pairs are evoked at the interface between the oxide 19 and the electrolytic solution 22 by supply of current to the mixture 10, the concentration gradient of the desorbed solvent molecules or the anions becomes more likely to be facilitated. As a result, presumably, desolvation at the interface between the oxide 19 and the electrolytic solution 22 becomes easy, and the interfacial resistance of the oxide 19 decreases. In addition, since the concentration gradient of the ions of the electrolytic solution 22 provided during charging and discharging also becomes more likely to be facilitated, the rate characteristics of the electrochemical element 11 are improved, and enhancement of fast charge performance and increased power density are expected. Moreover, in the case where the diffusion rate of a decomposition product due to charging and discharging of the electrochemical element 11 also increases, deposition of the decomposition product is reduced, and the cycle life is expected to become longer.

The target nuclide of NMR signal measurement varies depending on the type of the organic solvent contained in the electrolytic solution 22 and the type of the material of the electrolyte salt dissolved in the organic solvent. Examples of the nuclide include $^{1}H$, $^{13}C$, $^{19}F$, $^{6}Li$, $^{7}Li$, $^{11}B$, $^{23}Na$, and $^{31}P$. For example, measurement of $PF_{6-}$ by way of $^{19}F$ nuclide and $^{31}P$ nuclide and measurement of $^{1}H$ nuclide of $CH_3$ and $CH_2$ of an ethyl group observed as two types of signals yield similar self-diffusion coefficients if the same molecule is analyzed. Therefore, even in the case of an electrolytic solution in which a plurality of solvents and components are mixed, the self-diffusion coefficient can be obtained for each component if the component causes generation of a signal which does not overlap with signals attributed to other components.

For determination of the self-diffusion coefficient $D_L$ of the component of the electrolytic solution 22 which is not in contact with the oxide 19, pieces of information such as the electrolyte concentration of the electrolytic solution 22, the mixing ratio of a solvent, etc. are necessary. The electrolyte concentration of the electrolytic solution 22 contained in the mixture 10 is determined through, for example, the following procedure. Here, the case where the lithium salt concentration of the mixture 10 that constitutes the electrolyte layer 15 is determined will be described. However, the lithium salt concentration of the mixture 10 that constitutes the active material layers 14, 18 and the electrolyte salt (other than the lithium salt) can be similarly determined.

First, pieces obtained by crushing the electrolyte layer 15 are immersed in a solvent and thus the electrolytic solution 22 contained in the electrolyte layer 15 is dissolved in the solvent. Subsequently, the electrolytic solution-containing solvent is separated into a sold component and a liquid component through centrifugal separation or filtration. The Li content of the separated liquid component is determined through radiofrequency inductively coupled plasma spectroscopy (ICP).

In addition, the type of the organic solvent contained in the electrolyte layer 15 is determined through, for example, gas chromatograph-mass spectrometry (GC-MS). By drawing a calibration curve by use of an organic solvent whose type has been determined (hereinafter referred to as a "reference material"), it becomes possible to determine the amount of the organic solvent contained in the electrolyte layer 15 on the basis of the area of a chromatogram. Alternatively, analysis of the reference material and analysis of the electrolyte layer 15 are performed through thermogravimetric differential thermal analysis (TG-DTA), and the amount of the organic solvent contained in the electrolyte layer 15 is determined by comparing the results of the analysis of the reference material with the results of the analysis of the electrolyte layer 15. The lithium salt concentration (mol/kg) of the electrolytic solution 22 is calculated on the basis of the amount of Li contained in the liquid component and the amount of the organic solvent contained in the electrolyte layer 15.

On the basis of the components of the electrolytic solution 22 determined in the above-described manner, an electrolytic solution having the same composition as that of the electrolytic solution 22 contained in the electrolyte layer 15 is prepared. For the prepared electrolytic solution, the self-diffusion coefficient of each component is similarly determined,

whereby the self- diffusion coefficient $D_L$ of each component is obtained. If the self-diffusion coefficient $D_L$ of each component of the electrolytic solution 22 is known from literature or the like, the self-diffusion coefficient disclosed in the literature or the like may also be used.

In the mixture 10, the ratio of the volume of the oxide 19 to the sum of the volume of the oxide 19 and the volume of the electrolytic solution 22 is preferably 52% or greater and less than 100%, more preferably 61% or greater and less than 100%. It is particularly preferred that the ratio of the volume of the oxide 19 to the sum of the volume of the oxide 19 and the volume of the electrolytic solution 22 is equal to or less than 93%. By virtue of the combination of the oxide 19 with the electrolytic solution 22, the transport number of Li ions of the mixture 10 can be larger than that of the transport number of Li ions of the customary employed electrolytic solution 22. As a result, stability in operation of the electrochemical element 11 in which the mixture 10 is disposed is enhanced.

The amounts (vol.%) of the oxide 19 and the electrolytic solution 22 are determined through the following procedure. The electrolyte layer 15 is frozen or embedded in a tetrafunctional epoxy resin or the like, which is then solidified. Subsequently, 5,000x fields of view randomly selected from a cross section of the electrolyte layer 15 are analyzed by an SEM equipped with an energy dispersive x-ray spectrometer (EDS) to thereby determine the amounts of the oxide 19 and the electrolytic solution 22. In the analysis, distributions of La, Zr, and S are determined or image analysis is performed based on the contrast of a backscattered electron image, whereby the area of the oxide 19 and the area of the electrolytic solution 22 are determined. The amounts (vol.%) of the oxide 19 and the electrolytic solution 22 are obtained by considering the ratio of the areas in the cross section of the electrolyte layer 15 as the ratio of the volumes in the mixture 10 of the electrolyte layer 15.

The mixture 10 may contain a binder for binding the oxide 19. Examples of the binder include a fluororesin, polyolefin, polyimide, polyvinylpyrrolidone, poly(vinyl alcohol), cellulose ether, and rubber polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

Examples of the vinylidene fluoride-based polymer include a vinylidene fluoride homoploymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. One or more types of copolymerizable monomers polymerize with vinylidene fluoride to form a copolymer.

The electrochemical element 11 is fabricated through, for example, the following procedure. To the mixture 10 prepared by mixing together the oxide 19 and the electrolytic solution 22 containing an organic solvent in which a lithium salt has been dissolved, a solution of a binder dissolved in a solvent is added with mixing, to thereby form a slurry. The slurry is formed into a tape, which is then dried, to thereby yield a green sheet (electrolyte sheet) for providing the electrolyte layer 15.

To the mixture 10 prepared by mixing together the oxide 19 and the electrolytic solution 22 containing an organic solvent in which a lithium salt has been dissolved, the active material 20 and a solution of the binder dissolved in a solvent are sequentially added with mixing, to thereby form a slurry. The slurry is formed into a tape on the current-collecting layer 13 and then dried to form a green sheet (positive electrode sheet) for providing the positive electrode layer 12.

To the mixture 10 prepared by mixing together the oxide 19 and the electrolytic solution 22 containing an organic solvent in which a lithium salt has been dissolved, the active material 21 and a solution of the binder dissolved in a solvent are sequentially added with mixing, to thereby form a slurry. The slurry is formed into a tape on the current-collecting layer 17 and then dried to form a green sheet (negative electrode sheet) for providing the negative electrode layer 16.

The electrolyte sheet, the positive electrode sheet, and the negative electrode sheet are cut into predetermined shapes. The cut sheets (the positive electrode sheet, the electrolyte sheet, and the negative electrode sheet which have been cut) are stacked in this order, and the resultant stacked body is pressed to integrate the sheets. To each of the current-collecting layers 13 and 17, a terminal (not illustrated) is connected, and the stacked body is enclosed in a case (not illustrated). Thus, an electrochemical element 11 including the positive electrode layer 12, the electrolyte layer 15, and the negative electrode layer 16 is obtained.

Of course, it is possible to obtain the electrolyte layer 15 through press molding of the mixture 10 and obtain the positive electrode layer 12 or the negative electrode layer 16 through press molding of the mixture 10 containing the active material 20 or the active material 21, instead of obtaining the positive electrode layer 12, the electrolyte layer 15, and the negative electrode layer 16 by forming tapes from the slurry containing the mixture 10.

A second embodiment will next be described with reference to FIG. 4. In the first embodiment, there has been described the case where the mixture 10 is used in the power storage device whose power generating elements are formed

of a solid material. In the second embodiment, there will be described the case where the mixture 10 is used in a liquid-type lithium ion battery employing an electrolyte containing an organic solvent. Portions identical to the portions described in the first embodiment are denoted by the same reference numerals, and further descriptions thereof are omitted. FIG. 4 is a cross-sectional view of an electrochemical element 24 (power storage device) according to the second embodiment.

The electrochemical element 24 includes, from top to bottom, a positive electrode layer 12, a separator 25, and a negative electrode layer 16. These elements are built in a case (not illustrated). The separator 25 is formed of a porous body which is resistive to active materials 20, 21 contained in the positive electrode layer 12 and the negative electrode layer 16 and to an electrolytic solution and which allows passage of lithium ions but has no electron conductivity. Examples of the material of the separator 25 include a nonwoven fabric and a porous membrane formed of cellulose, polypropylene, polyethylene, etc. The electrolytic solution is the same as the electrolytic solution described in the first embodiment, and description thereof is omitted.

In the electrochemical element 24 according to the second embodiment, since the mixture 10 is contained in the positive electrode layer 12 and the negative electrode layer 16, similar to the electrochemical element 11 according to the first embodiment, the diffusibility of substances between the electrolytic solution 22 and the oxide 19 in each of the positive electrode layer 12 and the negative electrode layer 16 can be enhanced.

A third embodiment will next be described with reference to FIG. 5. In the first and second embodiments, there has been described the case where the mixture 10 is contained in the positive electrode layer 12, the electrolyte layer 15, and the negative electrode layer 16. In the third embodiment, there will be described case where the mixture 10 is contained in protective layers 29, 32. Portions identical to the portions described in the first and second embodiments are denoted by the same reference numerals, and descriptions thereof are omitted. FIG. 5 is a cross-sectional view of an electrochemical element 26 (power storage device) according to the third embodiment.

The electrochemical element 26 includes, from top to bottom, a positive electrode layer 27, a separator 25, and a negative electrode layer 30. These elements are built in a case (not illustrated). The electrochemical element 26 is a liquid-type lithium ion battery employing an electrolyte containing an organic solvent.

The positive electrode layer 27 includes an active material layer 28 and a current-collecting layer 13 disposed on active material layer 28. The active material layer 28 contains an active material 20. In order to lower the resistance of the active material layer 28, the active material layer 28 may further contain a conducting aid. Examples of the conducting aid include carbon black, acetylene black, Ketjen black, carbon fiber, Ni, Pt, and Ag.

Between the separator 25 and the negative electrode layer 30, a protective layer 29 is disposed. The protective layer 29 contains the mixture 10.

The negative electrode layer 30 includes an active material layer 31, the protective layer 32, and a current-collecting layer 17, which are stacked from top to bottom. The active material layer 31 is formed from, for example, Li, Li-Al alloy, Li-Sn alloy, Li-Si alloy, Li-Mg alloy, Li-Si alloy, or Si-Li alloy. The protective layer 32 contains the mixture 10. The protective layers 29, 32 are disposed through sheet lamination or application of the slurry onto the separator 25 or the current-collecting layer 17, or a similar technique. Since the protective layers 29, 32 contain the mixture 10, the diffusibility of substances between the oxide 19 and the electrolytic solution 22 in the protective layers 29, 32 can be enhanced.

In the case where the oxide 19 contained in the protective layers 29, 32 has a garnet-type crystal structure containing Li, La, Zr, and O, since the oxide 19 is resistive to chemical reduction by metallic lithium present in the active material layer 31, stability in operation of the electrochemical element 26 is enhanced. In addition, the protective layer 29 present between the active material layer 31 and the separator 25 suppresses short-circuit which would otherwise be caused by dendritic growth of metallic lithium. The protective layer 32 present between the active material layer 31 and the current-collecting layer 17 prevents degradation of the current-collecting layer 17.

## EXAMPLES

The present invention will next be described in more detail by way of Examples, which should not be construed as limiting the invention thereto.

(Example 1)

An electrolytic solution was prepared by mixing sulfolane and lithium bis(fluorosulfonyl) imide (LiFSI) at a mole ratio of 3:1. $\alpha$-Alumina, which is an oxide, and the electrolytic solution were put in a mortar at a ratio of 61:39 (volume ratio) and were mixed by using a pestle, whereby a mixture in Example 1 was obtained. The median diameter of a volume-based particle size distribution of $\alpha$-alumina determined by the laser diffraction and scattering method was 0.9 $\mu$m.

(Example 2)

A mixture in Example 2 was obtained in the same manner as employed in Example 1, except that, in place of $\alpha$-

alumina, tetragonal $Li_7La_3Zr_2O_{12}$ was mixed with the electrolytic solution. The median diameter of a volume-based particle size distribution of $Li_7La_3Zr_2O_{12}$ determined by the laser diffraction and scattering method was 0.8 μm.

(Comparative Example 1)

A mixture in Comparative Example 1 was obtained in the same manner as employed in Example 1, except that, in place of the electrolytic solution prepared by mixing sulfolane and LiFSI, an electrolytic solution prepared by mixing N-methyl-N-propylpyrrolidinium bis(fluorosulfonyl)imide (MPPy-FSI) and LiFSI at a mole ratio of 1.46:1 was mixed with α-alumina.

(Comparative Example 2)

A mixture in Comparative Example 2 was obtained in the same manner as in Example 1, except that, in place of the electrolytic solution prepared by mixing sulfolane and LiFSI, sulfolane (in which no lithium salt was dissolved) was mixed with α alumina at 40°C.

(Measurement of self-diffusion coefficient)

The self-diffusion coefficient $D_M$ (at 25°C) of each component of the electrolytic solution contained in each mixture was measured by a nuclear magnetic resonance spectrometer (JNM-ECA600II, product of JEOL RESONANCE Inc.) by using a pulsed magnetic field gradient. Each mixture (sample) was poured into a symmetric micro sample tube having an outer diameter of 5 mm such that the level of the mixture became 5 mm from the bottom of the outer tube, and the outer tube was sealed by an inner tube. By using a probe for diffusion measurement, the self-diffusion coefficient of each component of the sample was measured, without rotating the sample, by using a stimulated echo pulse sequence, while the magnetic field gradient was appropriately set within a range of 0.1 to 13.5 T/m. Specifically, the self-diffusion coefficient of a component containing $^1H$ nuclide (sulfolane) was measured at 600 MHz, the self-diffusion coefficient of a component containing $^{19}F$ nuclide (bis(fluorosulfonyl)imide anion) was measured at 564.73 MHz, and the self-diffusion coefficient of a component containing $^7Li$ nuclide (lithium ions) was measured at 233.25 MHz. The width of each magnetic field gradient pulse, diffusion time, recovery time after the magnetic field gradient pulse, and the number of times of integration were adjusted on a sample-by-sample basis in accordance with the states of signals observed.

As to the mixture in Comparative Example 2, measurement was performed only for the component containing $^1H$ nuclide. The self-diffusion coefficient $D_M$ of the component (sulfolane) containing $^1H$ nuclide was measured at 40°C, because the melting point of sulfolane is 29°C.

Similar to measurement of the self-diffusion coefficient $D_M$, for the electrolytic solution obtained by removing the oxide from each of the mixtures in Examples 1, Example 2, and Comparative Example 1, the self-diffusion coefficients $D_L$ of sulfolane, $[FSI]^-$ and $Li^+$ were measured at 25°C. Since sulfolane obtained by removing the oxide from the mixture in Comparative Example 2 does not contain $^{19}F$ nuclide and $^7Li$ nuclide, only $^1H$ nuclide was measured for determination of the self-diffusion coefficient $D_L$. Since the melting point of sulfolane is 29°C, its self-diffusion coefficient $D_L$ was measured at 40°C. Table 1 shows main conditions for measurement of self-diffusion coefficients.

[Table 1]

| | | Measured nuclide | Diffusion time (ms) | Width of magnetic field gradient pulse (ms) | Magnetic field gradient (T/m) | | |
|---|---|---|---|---|---|---|---|
| | | | | | Minimum value | Maximum value | Number of measurement points |
| Mixture | Ex. 1 | $^1H$ | 5 | 0.5 | 0.1 | 8.0 | 8 |
| | | $^7Li$ | 10 | 1.0 | 0.1 | 13.5 | 8 |
| | | $^{19}F$ | 3 | 0.3 | 0.1 | 13.5 | 16 |
| | Ex. 2 | $^1H$ | 10 | 1.0 | 0.1 | 13.5 | 8 |
| | | $^7Li$ | 12 | 1.2 | 0.1 | 13.5 | 8 |
| | | $^{19}F$ | 3 | 0.3 | 0.1 | 13.5 | 8 |

(continued)

| | | Measured nuclide | Diffusion time (ms) | Width of magnetic field gradient pulse (ms) | Magnetic field gradient (T/m) | | |
|---|---|---|---|---|---|---|---|
| | | | | | Minimum value | Maximum value | Number of measurement points |
| | Comp. Ex. 1 | $^{1}H$ | 5 | 0.5 | 0.1 | 13.5 | 8 |
| | | $^{7}Li$ | 10 | 1.0 | 0.1 | 13.5 | 8 |
| | | $^{19}F$ | 3 | 0.3 | 0.1 | 13.5 | 8 |
| | Comp. Ex. 2 | $^{1}H$ | 5 | 0.5 | 0.1 | 13.5 | 8 |
| Electrolytic solution | Ex. | $^{1}H$ | 500 | 1.0 | 0.1 | 2.0 | 8 |
| | | $^{7}Li$ | 500 | 1.0 | 0.1 | 5.0 | 8 |
| | | $^{19}F$ | 500 | 1.0 | 0.1 | 1.6 | 8 |
| | Comp. Ex. 1 | $^{1}H$ | 200 | 1.0 | 0.1 | 5.0 | 8 |
| | | $^{7}Li$ | 500 | 1.0 | 0.1 | 10.0 | 8 |
| | | $^{19}F$ | 500 | 1.0 | 0.1 | 2.0 | 8 |
| | Comp. Ex. 2 | $^{1}H$ | 5 | 0.5 | 0.1 | 13.5 | 8 |

As to Example 1, Example 2, and Comparative Example 1, Table 2 shows values ($D_M/D_L$) obtained by dividing the self-diffusion coefficients $D_M$ of sulfolane, $[FSI]^-$, and $Li^+$ of the electrolytic solution which was in contact with the mixture; i.e., the oxide, by the self-diffusion coefficients $D_L$ of sulfolane, $[FSI]^-$, and $Li^+$ of the electrolytic solution which was not in contact with the oxide. As to Comparative Example 2, Table 2 shows a value ($D_M/D_L$) obtained by dividing the self-diffusion coefficient $D_M$ of sulfolane which was in contact with mixture; i.e., the oxide, by the self-diffusion coefficient $D_L$ of sulfolane which was not in contact with the oxide.

[Table 2]

| | $D_M/D_L$ | | |
|---|---|---|---|
| | sulfolane | $[FSI]^-$ | $Li^+$ |
| Ex. 1 | 10 | 42 | 1 |
| Ex. 2 | 1 | 15 | 1 |
| Comp. Ex. 1 | 3 | 5 | 1 |
| Comp. Ex. 2 | 0.6 | - | - |

As shown in Table 2, the values $D_M/D_L$ of sulfolane, $[FSI]^-$ and $Li^+$ of the mixture in Example 1 were 10, 42, and 1, respectively. The values $D_M/D_L$ of sulfolane, $[FSI]^-$ and $Li^+$ of the mixture in Example 2 were 1, 15, and 1, respectively. The values $D_M/D_L$ of sulfolane, $[FSI]^-$ and $Li^+$ of the mixture in Comparative Example 1 were 3, 5, and 1, respectively. The value $D_M/D_L$ of sulfolane of the mixture in Comparative Example 2 was 0.6.

Comparison between the mixture in Example 1 and the mixture in Comparative Example 2 shows that the same oxide ($\alpha$-alumina) is contained in both the mixtures, and the same solvent (sulfolane) is contained in both the mixtures. However, whereas, in Example 1, the solvent contains an electrolytic solution in which an electrolyte salt (LiFSI) is dissolved, in Comparative Example 1, the electrolyte salt is not dissolved in the solvent. Because of this difference, whereas the value $D_M/D_L$ of sulfolane of the mixture in Example 1 was 10, the value $D_M/D_L$ of sulfolane of the mixture in Comparative Example 2 was 0.6. This result reveals that the diffusibility of substances at the interface of the oxide are enhanced by the electrolyte in sulfolane in addition to the oxide and sulfolane.

Comparison between the mixture in Example 1 and the mixture in Comparative Example 1 shows that the same oxide ($\alpha$-alumina) is contained in both the mixtures, and the same electrolyte salt (LiFSI) is contained in both the mixtures. However, whereas, in Example 1, the solvent of the electrolytic solution is sulfolane, in Comparative Example 1, the solvent

of the electrolytic solution is MPPy-FSI. Because of this difference, whereas the values $D_M/D_L$ of sulfolane and $[FSI]^-$ of the mixture in Example 1 were 10 and 42, respectively, the values $D_M/D_L$ of sulfolane and $[FSI]^-$ of the mixture in Comparative Example 1 were 3 and 5, respectively. This result reveals that, in the case where, in addition to the oxide and the electrolyte salt, sulfolane is contained in the electrolytic solution, the diffusibility of substances at the interface of the oxide are enhanced remarkably.

Although the mechanism of enhancing the diffusibility of substances at the interface of the oxide is not clear, presumably, the diffusibility of substances at the interface of the oxide are enhanced by a mechanism described below. As a result of adsorption of the components of the electrolytic solution to the surface of the oxide, the coordination sites of adsorbed molecules or ions are occupied, and thus, the electrostatic interaction with ions in the electrolytic solution around the coordination sites is weakened, whereby a layer in which diffusion rates of substances are high is formed in the vicinity of the interface of the oxide.

Comparison between the mixture in Example 1 and the mixture in Example 2 shows that the same electrolytic solution is contained in both the mixtures. However, whereas the oxide contained in the mixture in Example 1 is $\alpha$ alumina, the oxide contained in the mixture in Example 2 is tetragonal $Li_7La_3Zr_2O_{12}$. Because of this difference, whereas the values $D_M/D_L$ of sulfolane and $[FSI]^-$ of the mixture in Example 1 were 10 and 42, respectively, the values $D_M/D_L$ of sulfolane and $[FSI]^-$ of the mixture in Example 2 were 1 and 15, respectively.

Since the self-diffusion coefficient of the electrolytic solution in contact with $\alpha$-alumina (oxide) is large, in some cases, the ion conductivity of the oxide itself is not necessarily needed to enhance the diffusibility of a substance at the interface between the oxide and the electrolytic solution. It is presumed from this that, as a result of interaction between the oxide and the electrolytic solution, an ion conduction path of some kind is formed at the interface of the oxide or in the solution near the interface.

Notably, the ion conductivity of each of the mixtures in Examples 1 2 and the mixture of the present invention can be roughly estimated by calculating the ion conductivities of ion components contained in the electrolytic solution by the Nernst-Einstein equation from the self-diffusion coefficients $D_M$ of all the ion components, and summing up the ion conductivities of all the ion components contained in the electrolytic solution. However, the ion conductivity of the mixture estimated by this method is not necessarily required to coincide with the value of the ion conductivity obtained through, for example, electrochemical impedance measurement, which was performed at the same temperature at which the self-diffusion coefficient $D_M$ was measured. Similarly, in the case of the electrolyte contained in the electrolytic solution, the diffusion coefficient measured by other methods, including an electrochemical method based on a change in concentration of the electrolyte is not necessarily required to coincide with the value of the self-diffusion coefficient $D_M$.

The reasons of these views are as follows.

(1) The diffusibility of ions does not directly determine ion conductivity.
(2) In measurement of the self-diffusion coefficients of all the constituent ions in the mixture by the pulsed magnetic field gradient method, signals attributed to the constituent ions are not always observed.
(3) Since regions where the value of $D_M/D_L$ is large are locally and independently present in each sample, there is the possibility that a continuous ion conduction path is not formed through the entire sample.

However, since the diffusibility of substances are high in the regions where the value of $D_M/D_L$ is large, conceivably, the effect of reducing the concentration gradient can be obtained locally.

The present invention has been described on the basis of the embodiments. However, the present invention is not limited to the above embodiments. It can be easily inferred that various improvements and modifications are possible so long as they fall within the scope of the present invention.

In the above-described embodiments, there has been described the electrochemical element 11 which has the positive electrode layer 12 in which the active material layer 14 is provided on one surface of the current-collecting layer 13, and the negative electrode layer 16 in which the active material layer 18 is provided on one surface of the current-collecting layer 17. However, the present invention is not necessarily limited thereto. It should be apparent for those skilled in the art that the elements of the above embodiments can be applied to, for example, an electrochemical element which includes an electrode layer (so-called bipolar electrode) having the current-collecting layer 13 and the active material layer 14 and the active material layer 18 provided on the opposite surfaces of the current-collecting layer 13. By alternatingly stacking the bipolar electrode and the electrolyte layer 15 and putting the stacked body into a case (not illustrated), an electrochemical element having a so-called bipolar structure can be obtained.

In the above-described embodiments, there has been described the electrochemical element 11 in which all the active material layers 14, 18 and the electrolyte layer 15 contain the mixture 10 and the electrochemical element 24 in which both the active material layers 14, 18 contain the mixture 10. However, the present invention is not necessarily limited thereto. The electrochemical elements may be configured such that at least one of the active material layers 14, 18 and the electrolyte layer 15 contains the mixture 10.

In the above-described embodiments, there has been described the electrochemical element 26 in which the

protective layer 29 is disposed between the separator 25 and the negative electrode layer 30, and the protective layer 32 is disposed on the current-collecting layer 17. However, the present invention is not necessarily limited thereto. Needless to say, one of the protective layers 29, 32 may be omitted.

In the above-described embodiments, the mixture 10 has been described while showing, as examples, the electrochemical elements 11, 24, 26 composed of lithium ion batteries (power storage devices). However, the present invention is not necessarily limited thereto. Examples of other electrochemical elements containing the mixture 10 include metal ions batteries, other than lithium ion batteries, such as a sodium ion battery and a magnesium battery; an electrochemical capacitor employing electrode redox reaction, redox reaction of ions in electrolytic solution, or electric double layer; a metal-air battery using oxygen in the air as a positive electrode active material; a fuel cell; and an electrolysis device which chemically decomposes compounds or produces substances by chemical decomposition.

REFERENCE SIGNS LIST

10 mixture
11, 24, 26 electrochemical element (power storage device)
12, 27 positive electrode layer
15 electrolyte layer (sheet, separator)
16, 30 negative electrode layer
17 current-collecting layer
19 oxide
22 electrolytic solution
25 separator
29, 32 protective layer

## Claims

1. A mixture containing an oxide and an electrolytic solution, wherein
the electrolytic solution is formed of an electrolytic salt dissolved in a sulfone compound represented by a chemical formula (1),

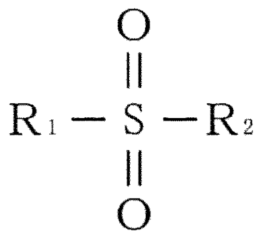
(1)

in the chemical formular (1), each of $R_1$ and $R_2$ independently represents a C1-C4 alkyl group, a C1-C4 alkenyl group, or a C1-C4 halogenated alkyl group, or two of the alkyl group, alkenyl group, and halogenated alkyl group are bonded to each other to form a ring structure,
wherein the self-diffusion coefficient of at least one component contained in the electrolytic solution in contact with the oxide, as measured through pulsed field gradient nuclear magnetic resonance spectroscopy, is equal to or greater than 6 times the self-diffusion coefficient of the component contained in the electrolytic solution which is not in contact with the oxide, measured by the pulsed field gradient nuclear magnetic resonance spectroscopy at the same temperature as that in measurement of the former self-diffusion coefficient.

2. The mixture according to claim 1, wherein the oxide is alumina.

3. The mixture according to claim 1 or 2, wherein the electrolyte salt is a lithium salt.

4. A sheet containing the mixture as recited in claim 1 or 2.

5. An electrochemical element containing the mixture as recited in claim 1 or 2.

**6.** A power storage device comprising a positive electrode layer, a negative electrode layer, and a separator which isolates the positive electrode layer and the negative electrode layer,
wherein the power storage device contains the mixture as recited in claim 1 or 2.

**7.** The power storage device according to claim 6, wherein at least one of the positive electrode layer, the negative electrode layer, and the separator contains the mixture.

**8.** The power storage device according to claim 6, wherein

at least one of the positive electrode layer and the negative electrode layer includes a current-collecting layer,
the power storage device comprises a protective layer which is in contact with at least one of the separator and the current-collecting layer, and
the protective layer contains the mixture.

FIG. 1

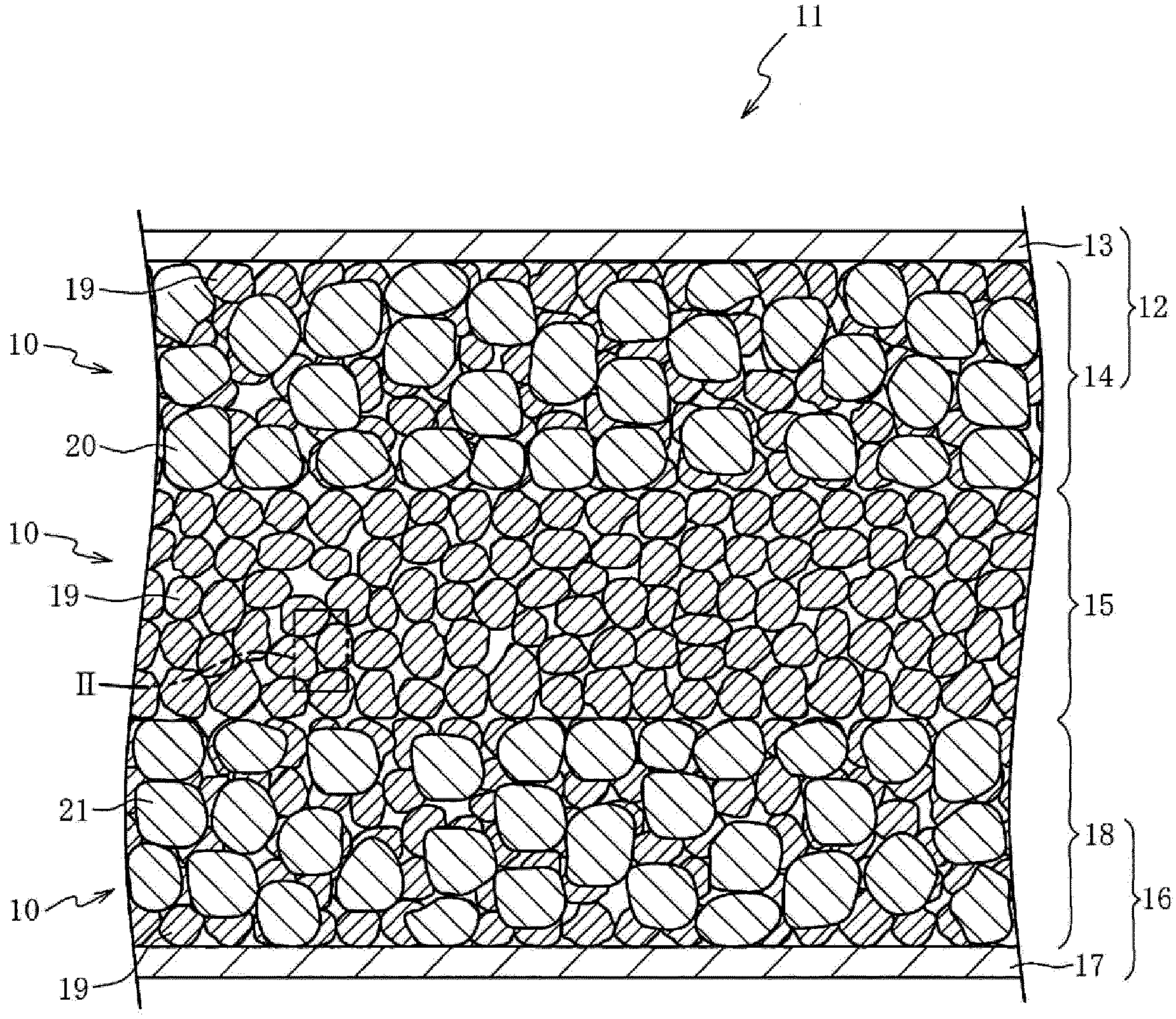

*FIG. 2*

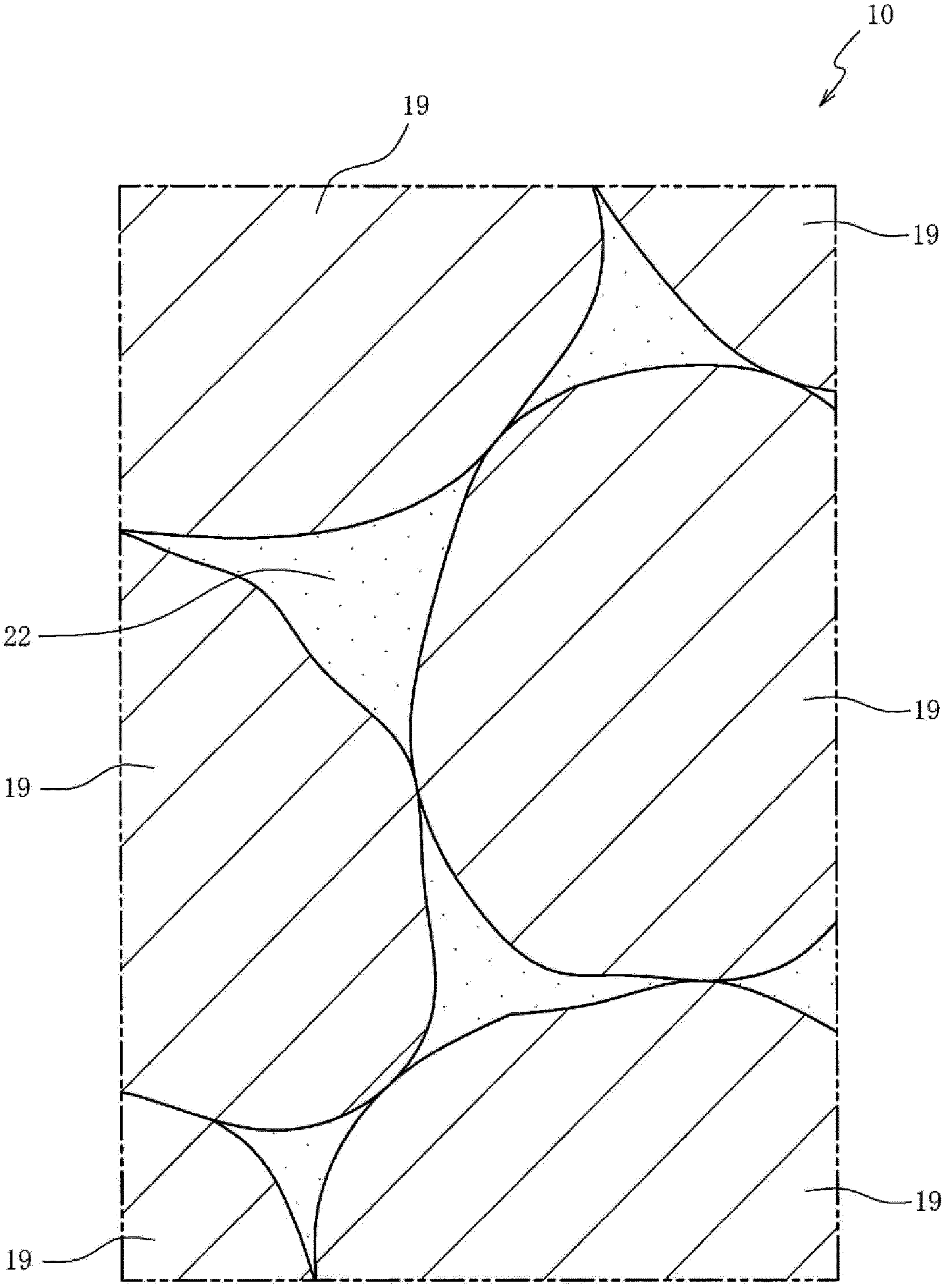

*FIG. 3*

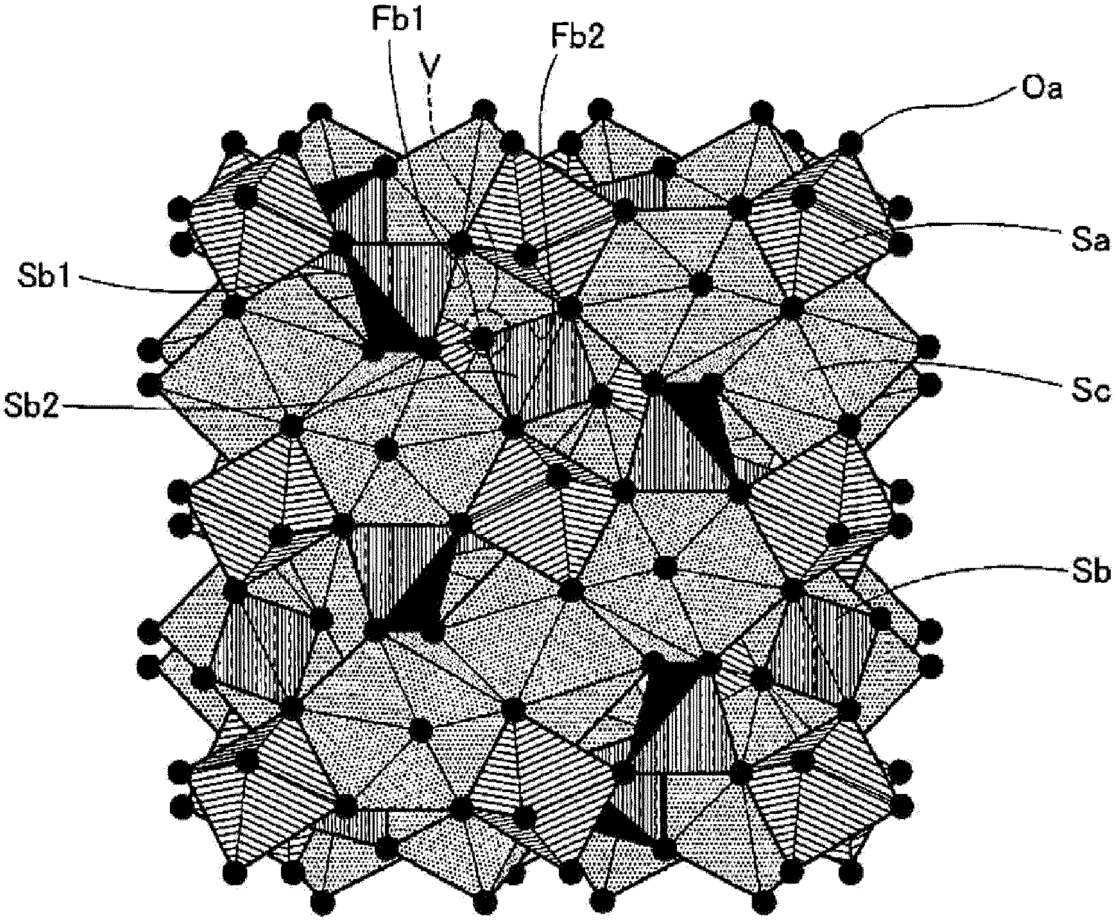

FIG. 4

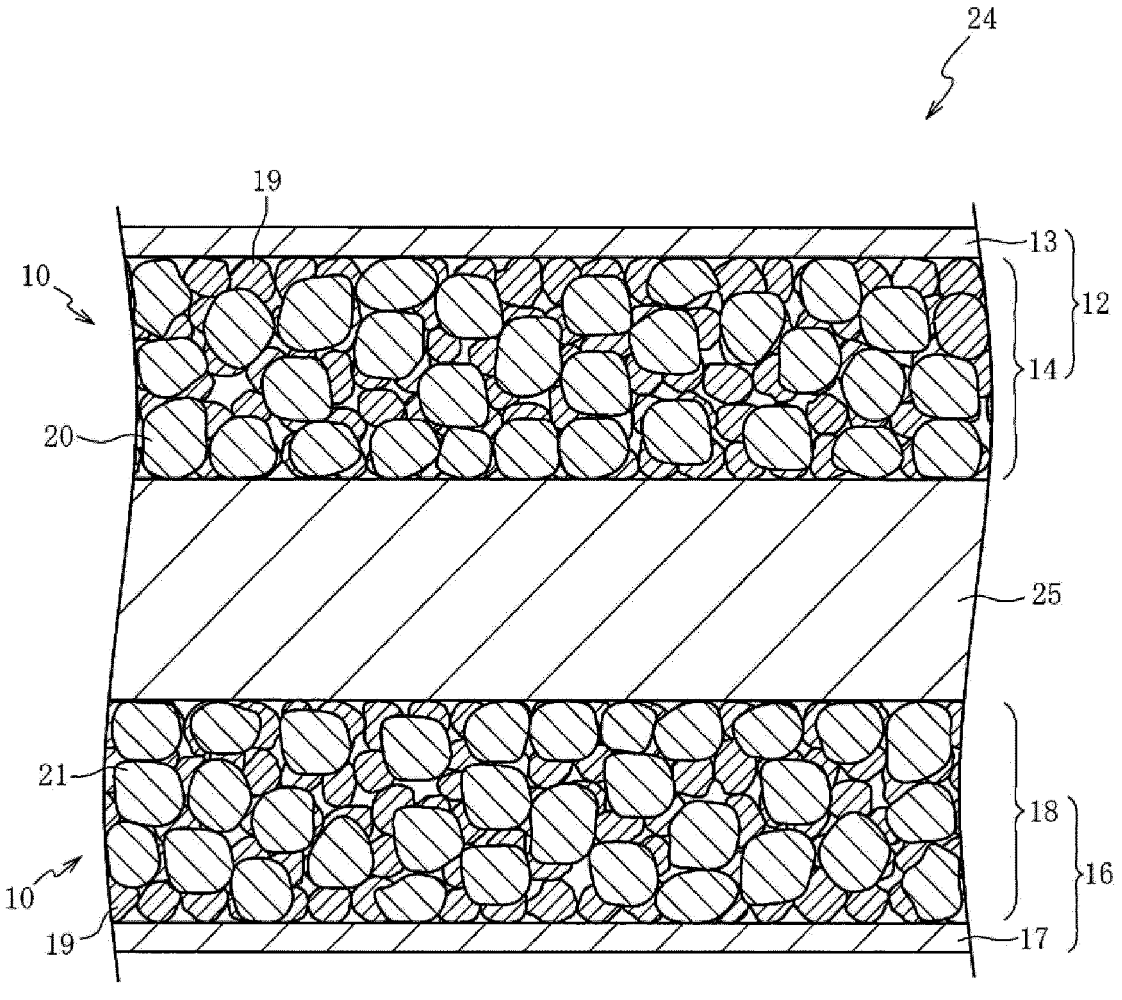

*FIG. 5*

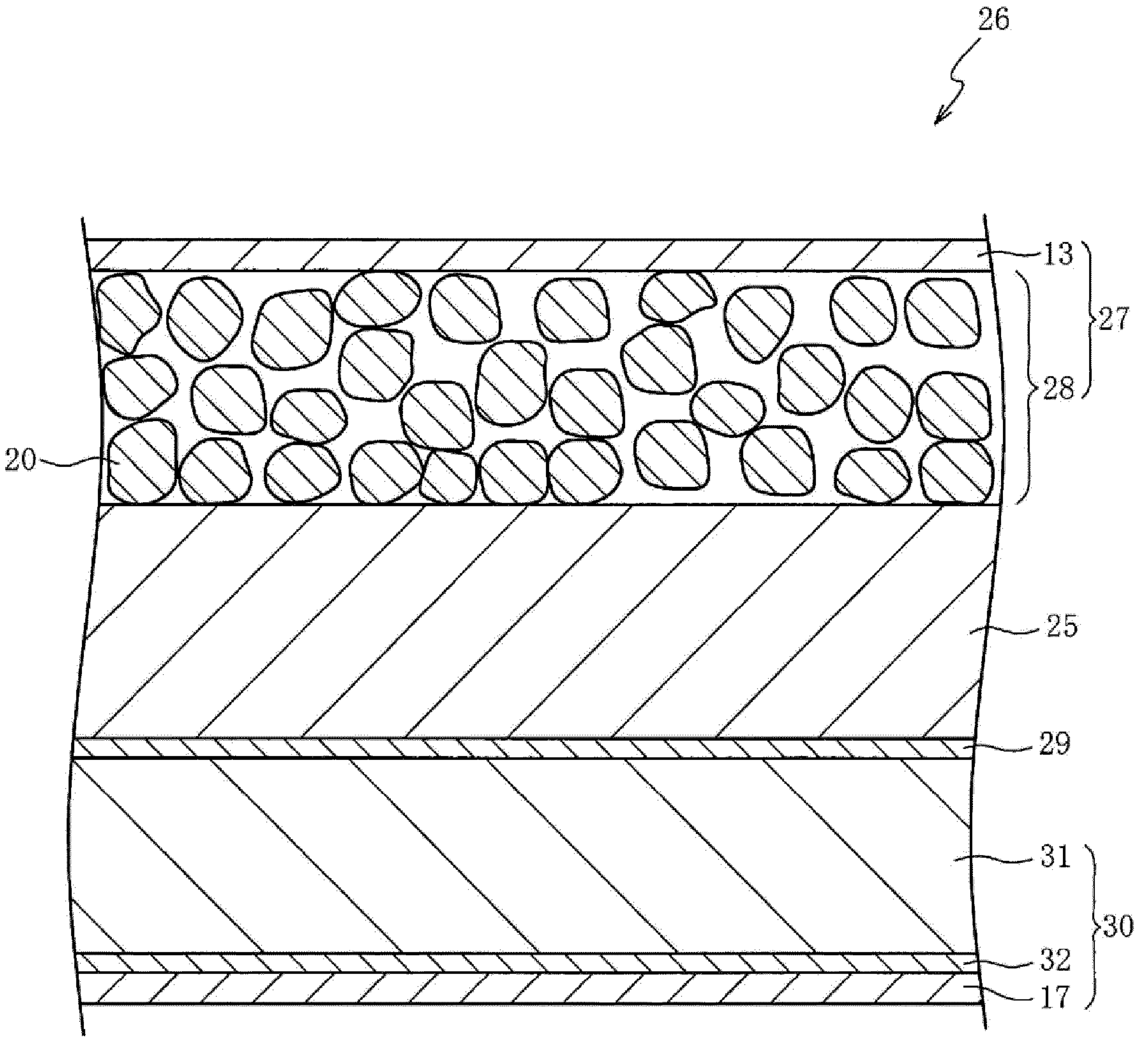

## INTERNATIONAL SEARCH REPORT

International application No.
**PCT/JP2023/031012**

**A. CLASSIFICATION OF SUBJECT MATTER**

***H01M 10/052***(2010.01)i; ***H01G 11/06***(2013.01)i; ***H01G 11/30***(2013.01)i; ***H01G 11/62***(2013.01)i; ***H01G 11/64***(2013.01)i; ***H01M 10/0567***(2010.01)i; ***H01M 50/431***(2021.01)i
FI: H01M10/052; H01G11/06; H01G11/30; H01G11/62; H01G11/64; H01M10/0567; H01M50/431

According to International Patent Classification (IPC) or to both national classification and IPC

**B. FIELDS SEARCHED**

Minimum documentation searched (classification system followed by classification symbols)

H01M10/052; H01G11/06; H01G11/30; H01G11/62; H01G11/64; H01M10/0567; H01M50/431

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-135076 A (PANASONIC CORPORATION) 18 June 2009 (2009-06-18) claims, paragraphs [0028], [0036], [0044], [0051], example 1 | 1-8 |
| X | JP 2021-89875 A (HITACHI, LTD.) 10 June 2021 (2021-06-10) claims, paragraphs [0028]-[0050], example 1 | 1-8 |
| X | JP 2020-145054 A (HITACHI, LTD.) 10 September 2020 (2020-09-10) claims, paragraphs [0029]-[0047], example 1 | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/031012**

| Patent document cited in search report | Publication date (day/month/year) | Patent family member(s) | Publication date (day/month/year) |
|---|---|---|---|
| JP 2009-135076 A | 18 June 2009 | US 2010/0068613 A1<br>claims, paragraphs [0043], [0053], [0062], [0069], example 1<br>CN 101578725 A<br>KR 10-2009-0095636 A | |
| JP 2021-89875 A | 10 June 2021 | (Family: none) | |
| JP 2020-145054 A | 10 September 2020 | CN 113169379 A<br>KR 10-2021-0087515 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020113527 A